Europäisches Patentamt

European Patent Office

Office européen des brevets

Veröffentlichungsnummer: **0 299 293**

**A2**

# EUROPÄISCHE PATENTANMELDUNG

Anmeldenummer: 88110511.8

Anmeldetag: 01.07.88

Int. Cl.⁴ **B29B 7/00**

Priorität: 16.07.87 DE 3723533

Veröffentlichungstag der Anmeldung:
18.01.89 Patentblatt 89/03

Benannte Vertragsstaaten:
AT BE CH DE ES FR GB GR IT LI LU NL SE

Anmelder: **Peter, Julius, Dr.**
**Tiergartenstrasse 107**
**D-3000 Hannover 71(DE)**

Erfinder: **Peter, Julius, Dr.**
**Tiergartenstrasse 107**
**D-3000 Hannover 71(DE)**

Vertreter: **Depmeyer, Lothar**
**i. Fa. Continental Aktiengesellschaft**
**Köningsworther Platz 1 Postfach 169**
**D-3000 Hannover 1(DE)**

## Verfahren zur Herstellung von Mischungen aus Kautschuk od. dgl.

Die Erfindung bezieht sich auf ein Verfahren zur Herstellung von Ruß enthaltenden Mischungen aus Kautschuk oder kautschukähnlichen Stoffen mit einer Vorwärmung im hochfrequenten Wechselfeld. Um bei der Herstellung von Kautschukmischungen von gleichen Mischungsbedingungen, insbesondere von gleichen Starttemperaturen ausgehen zu können, wird aufgrund der Erfindung dem Kautschuk oder dergl. vor der Behandlung im Wechselfeld nur ein Teil der vorgesehenen Rußmenge und der Rest im Anschluß an die Vorwärmung zugesetzt. Zweckmäßigerweise wird dem Kautschuk dabei vor seiner Behandlung im Wechselfeld maximal bis etwa ein Drittel der gesamten vorgesehenen Rußmenge hinzugefügt.

EP 0 299 293 A2

## Verfahren zur Herstellung von Mischungen aus Kautschuk od. dgl.

Die Erfindung betrifft ein Verfahren zur Herstellung von Ruß enthaltenden Mischungen aus Kautschuk oder kautschukähnlichen Stoffen mit einer Vorwärmung im hochfrequenten Wechselfeld.

Da die Vorwärmung von Kautschuk in Heißluftkammern problematisch ist, wurde bereits vorgeschlagen, den Kautschuk im hochfrequenten Wechselfeld vorzuwärmen. Diese Art der Vorwärmung konnte jedoch keinen Eingang in die Praxis finden, weil die überwiegende Zahl der Kautschuktypen einen zu geringen dielektrischen Verlustfaktor aufweisen.

Ferner muß davon ausgegangen werden, daß zum Beginn eines Mischprozesses in Abhängigkeit von der Temperatur, mit der der Kautschuk in den Kneter eingespeist wird, unterschiedliche Zieträume zum Plastizieren und zum Entkristallisieren benötigt werden. Zudem erleichtert auch die lokale Ungleichmäßigkeit der Erwärmung kalter Kautschukballen die Entstehung von Kautschukanteilen, die mit hochaktiven Füllstoffen überfüllt sind und sich erfahrungsgemäß nur schwer oder gar nicht in der anderen Matrix verteilen lassen. Hinzu kommt, daß auch die Zeit bis zur Energieaufnahme, also die Zeit bis zum eigentlichen Mischprozeß von der Zähigkeit und der Härte der beschickten Ballen abhängig ist. Auch dieser Tatbestand führt zu Ungleichmäßigkeiten bei der Mischungsherstellung. Diese Probleme entstehen in besonderem Maße bei Schaufelknetern mit ineinandergreifenden Schaufeln; sie sind aufgrund ihrer Bauart ohnehin schwerer beschickbar.

Die Erfindung geht weiterhin von der Erkenntnis aus, daß es wegen der Schwierigkeiten, die mit dem Handling von Ruß in Verbindung stehen, zweckmäßig erschien, bei Emulsionspolymerisaten den Ruß bereits in der Latexphase zuzusetzen, um so die weitere Mischarbeit abzukürzen und die nachteilige Granulierung des Rußes auszuschalten. Ähnliches trifft für die Lösungspolymere zu, da dort wegen der niedrigen Scherkräfte ein möglichst gutes Vorverteilen des Rußes noch größere mischungstechnische Vorteile mit sich bringen würde. Dennoch stößt aber der sogenannte Rußbatch an Grenzen. Dies liegt u.a. an der Typenvielfalt der Ruße und an dem Mangel, den eingesetzten Ruß beim Fabrikanten der Gummierzeugnisse nicht in gehörigem Maße überprüfen zu können. Aus diesen Gründen wird in der Praxis die weitaus größte Menge an Kautschukmischungen unter Verzicht auf Rußbatch gefertigt.

Diese Nachteile sollen aufgrund der Erfindung vermieden werden. Insbesondere soll erreicht werden, bei zur Herstellung von Kautschukmischungen unterschiedlicher Eigenschaften gewissermaßen von gleichen Mischungsbedingungen, insbesondere aber von gleichen Starttemperaturen ausgegangen werde kann, so daß demgemäß beim Vorhandensein eines bestimmten Batches hieraus z.B. alle gängigen Laufflächenmischungen für Fahrzeugreifen oder alle Haftmischungen für den Bau von Automobilreifen erstellt werden können. Angestrebt wird weiterhin eine Verringerung der Gesamtmischzeit.

Diese Aufgabe wird erfindungsgemäß dadurch erreicht, daß dem Kautschuk od. dgl. vor der Behandlung im Wechselfeld nur ein Teil der vorgesehenen Rußmenge und der Rest im Anschluß an die Vorwärmung zugesetzt werden. Zweckmäßigerweise wird dabei dem Kautschuk zunächst nur etwa ein Drittel der endgültig vorgesehenen Rußmenge zugesetzt, wobei man vorzugsweise von Rußmengen in der Größenordnung von etwa 5 - 15 % (berechnet auf 100 Teile Kautschuk) ausgehen kann.

Aus verständlichen Gründen soll bei dieser Vorwärmung nicht die Vulkanisationstemperatur erreicht werden, vielmehr ist im Regelfalle eine Vorwärmung auf etwa 40 - 60° C vorgesehen. Wichtig ist ferner, daß eine solche Vorwärmung nicht etwa impulsartig, sondern auf einen Zeitraum ausgedehnt werden soll, der durch den Mischungszylklus bestimmt werden soll. Demgemäß kann sich die Vorwärmzeit über mehrere Minuten erstrecken. Daher genügen auch wenige Prozent an Ruß, um eine ausreichende dielektrische Verlustarbeit sicherzustellen. Die Lehre, bei der hochfrequenten Vorwärmung zunächst von einem vergleichsweise geringen Rußanteil auszugehen und die Vorwärmung über Minuten zu vollziehen, ergänzt die bisher üblichen Mischprozesse, ohne sie zeitlich oder von ihrem technischen Aufwand her nennenswert abändern zu müssen, wobei zu erwähnen ist, daß der Aufwand für eine geeignete Vorwärmanlage in einem vertretbaren Verhältnis zum Aufwand für eine Mischeinrichtung steht.

Geht man z.B. von einer Rußdosierung 5 bis 15 Teilen N 339 bei SBR oder OESBR aus, so kann man unter der Voraussetzung, daß auch ein BR - Rußbatch ähnlicher Zusammensetzung zur Verfügung steht, praktisch alle gängigen PKW-Laufflächen für Luftreifen aus einigen Rußbatchtypen in einfacher Weise herstellen. Aus einem Naturkautschuk-Rußbatch vergleichbarer Zusammensetzung könnten weiterhin praktisch alle Lastkraftwagen-Luftreifen-Kautschukmischungen sowie alle Stahlseilhaftmischungen hergestellt werden. Bei EPDM ergibt sich auch der Vorteil, daß aufgrund der Erfindung die Lichtstabilität des Polymeren verbessert werden kann, ein Problem, das sich heute in der Praxis häufig ergibt.

Um die Hochfrequenzvorwärmung niedrig gefüllter Rußbatches wirtschaftlich und den jeweiligen Anforderungen entsprechend durchführen zu können, ist es zweckmäßig, vor der Behandlung im Wechselfeld das Gewicht , die Temperatur und die Gestalt des zu behandelnden Körpers zu ermitteln, damit in Abhängigkeit von diesen Werten eine genaue Vorwärmung auf eine reproduzierbare Temperatur erfolgen kann. Besonders zweckmäßig ist es dabei, wenn zur Feststellung der Gestalt des zu behandelnden Kautschukkörpers eine oder mehrere Strahlungsquellen, z.B. Infrarotstrahler, verwendet werden, denen auf diese Strahlen ansprechende Sensoren zugeordnet werden müssen. Hiermit ist es möglich, z.B. die Konturen festzustellen; der sogenannte Formfaktor kann dann in die Berechnung einer günstigen HF-Vorwärmung eingehen. Mit einem solchen Gerät können auch das Gewicht und/oder die Temperatur ermittelt werden.

Mischungen aus Kautschuk oder dergl. im Sinne dieser Anmeldung sind alle Mischungen, die vorwiegend aus Kautschuk oder kautschukähnlichen Stoffen bestehen und daneben weitere Zuschläge enthalten können, zwingend aber den für die Hochfrequenzvorwärmung wichtigen Ruß enthalten müssen.

Die sich an die vorgenannte Vorwärmung anschließenden Arbeitsgänge, die eine Komplettierung der Mischung vorsehen, können beliebiger Art sein, insbesondere können hier die bewährten sogenannten Innenmischer benutzt werden, deren Wirkzeit jedoch eine Richtschnur für die Dauer und UHF-Vorwärmung sein soll. Diese sollte - um das Mischverfahren insgesamt nicht negativ zu beeinflussen, wie schon erwähnt - maximal auf die Dauer eines Hauptmischgangs beschränkt sein.

Besonders vorteilhaft ist es, wenn die weitere Herstellung der Mischung nach der Vorwärmen im dielektrischen Feld in einem Einstufenprozeß erfolgt, jedoch ist auch ein Tandem-Mischprozeß in der Weise möglich, daß man das Mischgut von einem als Stempelkneter ausgeführten Grundmischer ohne Zwischenlagerung zu dem als stempellosen Kneter ausgeführten Fertigmischer befördert, wobei für beide Mischer vorzugsweise Kneter benutzt werden mit zusammenwirkenden, vorzugsweise ineinandergreifenden, gegenläufig angetriebenen Rotoren.

Aufgrund der Erfindung ist es vorteilhaft, wenn bei Emulsionspolymerisaten und Naturkautschuk die erste Rußmenge in der Latexphase und bei Lösungspolymerisaten die erste Rußmenge in der Lösungsphase zugesetzt wird.

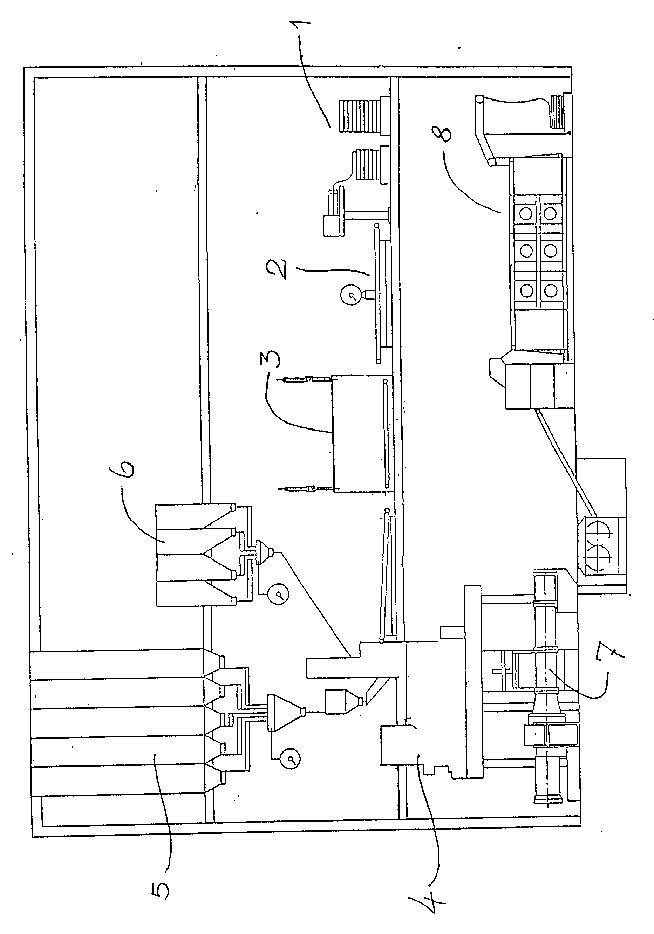

In der Zeichnung ist eine Herstellungseinrichtung für Mischungen aus Kautschuk oder dergl. schematisch dargestellt.

Vom Vorratslager 1 mit Rußbatches in Ballenform oder in Form von Fellen gelangt der Kautschuk auf eine Waage 2 bei Raumtemperatur in Höhe von 10 bis 25° C. In bemessener Menge wird dann der Kautschuk in der UHF-(Ultrahochfrequenz)Vorwärmeinrichtung 3 erwärmt, und zwar auf etwa 40 bis 60° C.

Oberhalb eines Innenmischers 4 bekannter Ausführung befinden sich Silos 5, 6 für weitere Zuschlagstoffe. Das Silo 5 ist dabei ein Rußbunker, das Silo 6 enthält nichtreaktive Zuschläge.

Im Innenmischer 4 erfolgt dann die weitere Behandlung unter Zugabe der Zuschläge bzw. des Rußes aus den Silos 5, 6. Die so bearbeitete Mischung gelangt in eine Austragsvorrichtung 7. Von dort gelangt der Kautschuk zur sogenannten Batch-Off-Anlage 8. Dort wird auch der Kautschuk gekühlt.

Es sei erwähnt, daß der im Vorratslager befindliche Kautschuk bereits einen gewissen Anteil Ruß enthält und daß nach der Behandlung im UHF-Feld über das Silo 5 weiterer Ruß im Sinne der Erfindung zugeführt wird.

In Verbindung mit der Waage 2, gegebenenfalls aber auch unter Verzicht auf eine Waage 2 kann ein Infrarotgerät benutzt werden, um die Eigenschaften der Kautschukmischung festzustellen. Dieses Infrarotgerät kann beliebig ausgestaltet sein.

Für die Behandlung und die Zusammensetzung der Kautschukmischung werden folgende Beispiele genannt (phr sind dabei Gewichtsteile auf 100 Teile Gummi).

Beispiel 1:

| Eine Mischung, bestehend aus: | |
|---|---|
| 100,0 phr | SBR 1712 (Copolymerisat von 77% Butadien und 23% Styrol, extendiert mit 37,5 phr hocharomatischem Mineralöl) |
| 1,0 phr | Stearinsäure |
| 5,0 phr | Zinkoxyd |
| 52,0 phr | aktiver Gasruß, Typ N 339 |
| 7,5 phr | aromatisches Mineralöl |
| 3,5 phr | Coumaronharz |
| 1,5 phr | Alterungsschutzmittel IPPD |
| 0,5 phr | Alterungsschutzmittel PBN |
| 1,0 phr | Ozonschutzwachs |
| 1,5 phr | Beschleuniger CBS |
| 1,5 phr | Schwefel |
| 174,0 | |

wurde nach dem beschriebenen Verfahren derart hergestellt, daß zunächst die aliquote Menge eines Batches, bestehend aus 100,0 phr OE-SBR 1712 und 20,0 phr Ruß N 339, der dem Kautschuk bereits in der Latexphase während der Herstellung zugesetzt worden war, zweieinhalb Minuten im Hochfrequenzfeld von 3 mal 60 kw erwärmt, und anschließend die nichtreaktiven Stoffe im Kneter zugesetzt.

Die Mischzeiteinsparung bei der Herstellung der Grundmischung gegenüber dem konventionellen Verfahren betrug 35%.

Nach dem Fertigmischen zeigten die auf diese Weise hergestellten Mischungen keinerlei Abweichungen, weder in ihrem Verarbeitungsverhalten noch in den physikalischen Werten nach der Vulkanisation.

Beispiel 2:

| Eine Mischung, bestehend aus (alle Angaben in phr): | |
|---|---|
| 100,0 | Smoked Sheets, Mooneyplast.ML-4:65 |
| 2,5 | Stearinsäure |
| 7,5 | Zinkoxyd |
| 50,0 | Ruß N 220 |
| 5,0 | aromatisches Mineralöl |
| 5,0 | Coumaronharz |
| 1,5 | Alterungsschutzmittel IPPD |
| 0,5 | Alterungsschutzmittel PBN |
| 1,0 | Ozonschutzwachs |
| 1,5 | Beschleuniger CBS |
| 1,5 | Schwefel |
| 174,0 | |

wurde nach dem beschriebenen Verfahren so hergestellt, daß zunächst die aliquote Menge eines Rußbatches, bestehend aus 100,0 phr Smoked Sheets und 10 phr Ruß N 220 im Kneter vorgemischt wurde. Dieser Batch wurde vor der weiteren Verarbeitung zwei Minuten im Hochfrequenzfeld von 4 mal 60 kw erwärmt, und anschließend die nichtreaktiven Stoffe im Kneter eingemischt.

Die Mischzeiteinsparung gegenüber dem konventionellen Verfahren konnte dabei von vier auf zweieinhalb Minuten reduziert werden.

Auch in diesem Fall waren sowohl die Eigenschaften der Rohmischungen als auch der Werte der Vulkanisate (nach Zumischen der reaktiven Stoffe) identisch.

Beispiel 3:

| Eine Mischung, bestehend aus: | |
|---|---|
| 100,0 phr | EPDM-Kautschuk (Terpolymerisat, bestehend aus 65% Äthylen, 30% Propylen und 5% Äthylidennorbornen) |
| 1,0 phr | Stearinsäure |
| 150,0 phr | FEF-Ruß, Typ N 550 |
| 150,0 phr | paraffinisches Mineralöl |
| 0,5 | Alterungsschutzmittel IPPD |
| 3,5 | Dicumylperoxyd (40% ig) |
| 1,5 | Triallylcyanurat |
| 406,5 | |

wurde nach dem beschriebenen Verfahren derart hergestellt, daß eine aliquote Menge eines Rußmasterbatches, bestehend aus 100,0 phr EPDM-Kautschuk und 50 phr FEF-Ruß, der bereits während der Herstellung in der Lösungsphase dem Kautschuk beigemengt worden war, in einem Hochfrequenzfeld von 3 mal 60 kw drei Minuten vorgewärmt und anschließend die nichtreaktiven Stoffe im Kneter zugefügt wurden.

Die Mischung konnte in einer gegenüber dem konventionellen Verfahren um 40% kürzeren Zeit bei wiederum völlig gleichem Verfahren sowohl der Rohmischung als auch der Vulkanisate hergestellt werden.


**Ansprüche**

1. Verfahren zur Herstellung von Ruß enthaltenden Mischungen aus Kautschuk oder kautschukähnlichen Stoffen mit einer Vorwärmung im hochfrequenten Wechselfeld, **dadurch gekennzeichnet,** daß dem Kautschuk oder dergleichen vor der Behandlung im Wechselfeld nur ein Teil der vorgesehenen Rußmenge und der Rest im Anschluß an die Vorwärmung zugesetzt wird.

2. Verfahren nach Anspruch 1, dadurch gekennzeichnet, daß dem Kautschuk oder dergleichen vor der Behandlung im elektrischen Wechselfeld maximal bis etwa ein Drittel der gesamten Rußmenge zugesetzt wird.

3. Verfahren nach Anspruch 2, dadurch gekennzeichnet, daß dem Kautschuk oder dergleichen lediglich etwa 5 bis 15 %, berechnet auf 100, Teile Kautschuk zugesetzt werden.

4. Verfahren nach Anspruch 1, dadurch gekennzeichnet, daß die erste Rußmenge bei Emulsionspolymerisaten und Naturkautschuk in der Latexphase, bei Lösungspolymerisaten in der Lösungsphase, zugesetzt wird.

5. Verfahren nach Anspruch 1 bis 4, dadurch gekennzeichnet, daß der Kautschuk mit Rußanteil vor dem weiteren Mischen auf etwa 40 bis 60 °C vorgewärmt wird.

6. Verfahren nach Anspruch 1, dadurch gekennzeichnet, daß die Vorwärmung für die Dauer des an die Vorwärmung anschließenden Mischzyklus erfolgt.

7. Verfahren nach Anspruch 6, dadurch gekennzeichnet, daß die Erwärmung in etwa drei bis sechs Minuten erfolgt.

8. Verfahren nach Anspruch 1, dadurch gekennzeichnet, daß die weitere Herstellung der Mischung nach dem Vorwärmen im dielektrischen Feld in einem Einstufenprozeß erfolgt.

9. Verfahren nach Anspruch 1, dadurch gekennzeichnet, daß die weitere Herstellung der Mischung nach dem Vorwärmen im dielektrischen Feld in einem Tandem-Mischprozeß erfolgt.

10. Verfahren nach Anspruch 8 und/oder 9, dadurch gekennzeichnet, daß die weitere Herstellung der Mischung im Anschluß an die Vorwärmung im hochfrequenten Wechselfeld in einem Innenmischer mit ineinandergreifenden Schaufelsystemen erfolgt.

11. Verfahren nach Anspruch 1 bis 7, dadurch gekennzeichnet, daß die Behandlung im Wechselfeld in Abhängigkeit von Gewicht, Gestalt und Temperatur des zu behandelnden Körpers erfolgt.

12. Vorrichtung zur Durchführung des Verfahrens nach Anspruch 11, dadurch gekennzeichnet, daß die Ermittlung von Gewicht und/oder Gestalt und/oder Temperatur durch ein Infrarotgerät erfolgt.

EP 0 299 293 A2